# EUROPEAN PATENT SPECIFICATION

(11) **EP 1 884 182 B1**
(45) Date of publication and mention of the grant of the patent: **02.01.2013**
(21) Application number: 07253052.0
(22) Date of filing: 02.08.2007
(51) Int. Cl.: A47L 23/26

(54) **Modular flooring system**
Modulares Bodensystem
Système modulaire de planchers

(30) Priority: 05.08.2006 GB 0615594
(43) Date of publication of application: 06.02.2008
(73) Proprietor: Bonar Floors Limited, Derbyshire, DE5 3NT (GB)
(72) Inventor: France, Paul, Ripley, Derbyshire DE5 3NT (GB)
(74) Representative: Wagner, Wolfgang Heribert

(56) References cited:
- EP-A- 1 520 507
- WO-A-99/34971
- CH-A5- 692 442
- DE-U1- 9 003 103
- DE-U1- 20 115 339

## Description

### Field of the invention

The invention concerns a wiper unit for a modular flooring system as well as a modular flooring system comprising such wiper units. The invention further concerns a method for producing such a wiper unit as well as a method of assembling a modular flooring system according to the invention. Modular flooring systems of the kind the invention refers to are used in particular at entrances to buildings having large volumes of traffic entering and leaving such as public buildings, shops, shopping centres, offices etc. Their primary purpose is to remove dirt and other contaminants from footwear etc. of traffic entering the building.

### Prior art

A wiper unit of the generic type is known from DE 201 15 339 U1. It comprises a base with, on an upper side, a groove for taking up strip-shaped wiper material. The groove is located between lateral webs which have, at their upper ends, ridges extending somewhat over the groove in order to hold the wiper material in place. However, as the wiper material is not secured, there is a considerable risk for it to become displaced during use and partially project from the groove, forming impediments which can cause stumbling and even falls with a risk of serious injuries.

A similar wiper unit where the strip-shaped wiper material is projecting from a groove and retained only by ridges which extend from lateral webs delimiting the groove and press against the sides of the lower part of the strip is known from DE 90 03 103 U1. Here, too, the wiper material may easily come loose and form dangerous impediments.

### Summary of the invention

It is an object of the invention to provide a wiper unit of the generic type where the wiper material is securely retained on the base, and a method for its manufacture. This object is achieved by the features in the characterizing portion of claim 1 and by the method of claim 41, respectively. The assembly step according to claim 41 is extremely quick and easy and does not require any special skills or tools. The securing of the wiper material can also be easily reversed and repeated if the said material is to be removed, e.g., for cleaning and put back in place later or replaced by a different piece of wiper material.

It is another object of the invention to provide a modular flooring system comprising wiper units according to the invention, as well as a method for assembling such modular flooring system.

Preferred embodiments of the present invention will now be described by way of example only, with reference to the accompanying drawings in which:
Fig. 1 is a cross-sectional view of a base of a wiper unit according to the present invention;
Fig. 2 is a similar view of a wiper unit according to the present invention;
Fig. 3 is a cross-sectional view of a series of three interconnected base units forming part of a partly assembled modular flooring system according to the present invention;
Fig. 4 is a cross-sectional view of a modular flooring system according to the present invention;
Fig. 5 is a perspective view of part of a modular flooring system according to the present invention;
Fig. 6a is a cross section of a foot insert;
Fig. 6b is a cross section of a second foot insert according to the present invention; and
Fig. 7 is a cross section of an end section according to the present invention.

The present invention provides a modular flooring system 10, a method of manufacturing a modular flooring system 10 and components of a modular flooring system 10.

A modular flooring system 10 according to this invention comprises a plurality of interconnected wiper units 12, one or more of which comprises a base 14 with integral formations 16, 18 that extend to retain wiper material 20 in place on the base 14.

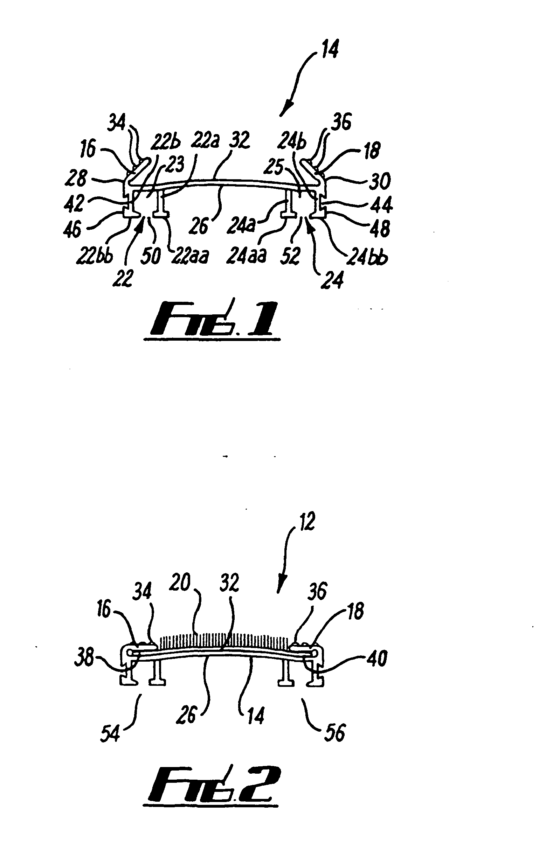

In more detail, each wiper unit 12 comprises an elongate base 14 with a constant cross-section as illustrated in Fig. 1. The base 14 comprises two spaced part-box section support structures 22 and 24 that run generally parallel below an upper substantially planar section 26 bridging thereover. The support structures 22, 24 are located along respective elongate edges of the unit 14 to provide the structural strength and support of the flooring system 10 during use.

Each support structure 22, 24 comprises two generally mutually parallel side sections 22a, 22b, 24a, 24b respectively which extend downwardly to define a channel section 23,25. Each channel section 23,25 extends along the length of the wiper unit 12.

Each side section 22a, 22b, 24a, 24b comprises a ridge formation 22aa, 22bb, 24aa, 24bb that extends generally perpendicularly from the lower edge thereof to extend partway across the opening of the channel section 23,25. The ridge formations 22aa, 22bb, 24aa, 24bb in a support structure 22,24 extend to face each other in an aligned but spaced configuration whereby to reduce the width of the opening 50, 52 of the respective channel sections 23, 25.

The formations 16, 18 extend from a respective upper elongate edge of the base 14. The formations 16, 18 are generally in the form of elongate lips that extend along the length of the base 14, and each is selectively movable generally about its region of contact 28, 30 with the upper surface 32 of the section 26. At the regions 28, 30 the respective formations 16, 18 are relatively resilient and malleable to allow manufacture of the wiper unit 14 and assembly of the flooring system 10 as will be described.

Each integral formation 16, 18 comprises a series of scraper formations, in this case ribs 34, 36, along the in use upper surface thereof, which provide a scraping facility, again as will be described. The ribs 34, 36 may be replaced or complemented with other suitable scraper formations such as hatching, bumps, ridges etc.

Each wiper unit 12 comprises wiper material 20 firmly located on the upper surface 32 of the base unit 14, when the unit 12 has been assembled.

To assemble a wiper unit 14, a strip of wiper material 20, corresponding generally in size and shape to the upper surface 32 of the base 14, is located on the surface 32. To allow location, the formations 16, 18 extend upward, at an angle of between 30° and 90° and preferably about 45°, relative to the surface 32 (Fig. 1). The edges 38, 40 of the wiper material 20 locate beneath the formations 16, 18 and preferably abut or are in close proximity to the regions 28, 30. The wiper material 20 may comprise a strip of carpet, flocked floor covering or other material suitable to provide a wiping effect on footwear and other traffic passing thereover. The integral formations 16, 18 are then moved or crimped, about the relatively malleable regions 28, 30, to locate over and clamp down on the edge regions 38, 40 of the wiper material 20, to hold the wiper material 20 between the respective formations 16, 18 and the upper surface 32.

The material from which the base 14 is formed, and in particular the material at the regions 28 and 30, is chosen to be sufficiently resilient to be movable at least to enable assembly of the wiper unit 12, without any significant fracture, but to be sufficiently mechanically strong to function to adequately secure and retain the wiper material 20 in position during use.

The base 14 may be comprised of aluminium or an aluminium alloy, and may be formed by extrusion.

A modular flooring system 10 according to one embodiment of the invention comprises two slightly different wiper units 12; in one form of unit 12 each support section 22, 24 comprises a connecting channel 42, 44 each of which has a cross section generally of a "dovetail" configuration similar to the other, and extends along a respective outer edge surface 46, 48 of the base 14. (See Figs. 1 and 2).

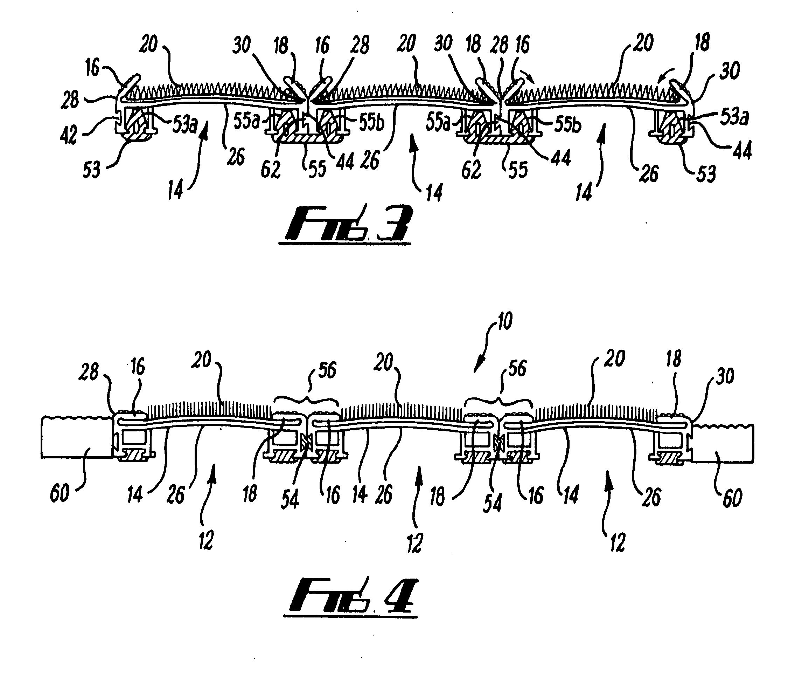

The second form of wiper unit 12 is essentially as described above, but instead of having a connecting channel 42, 44 on both outer edge surfaces 46,48, it has such a channel 42 on one edge and a correspondingly shaped projecting or male connecting formation 62 on the other edge (See Fig. 3).

The channel openings 50, 52 extending along an in use lowermost surface of the base 14, receive non-slip feet inserts 53, 55, which may be in the form of rubber or other plastic mouldings or extrusions, to help prevent movement of the flooring system during use.

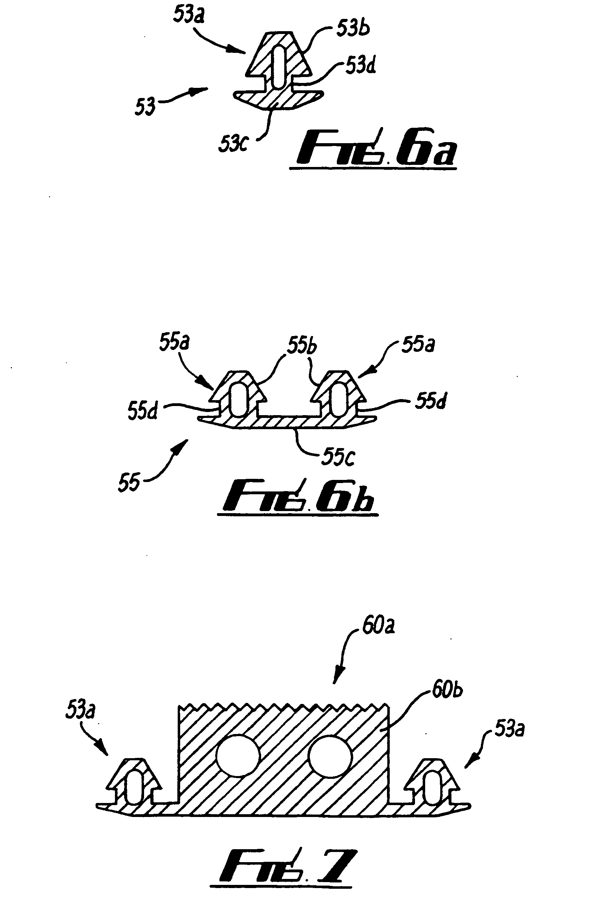

One form of feet inserts 53 is shown in Fig. 6a. This comprises an engaging formation 53a that locates through the openings 50, 52 to engage around the ridge formations 22aa, 22bb, 24aa, 24bb to securely locate the insert 53 in a respective channel section 42, 44. The engagement formation 53a comprises an arrowhead shaped portion 53b connected to a foot portion 53c by a neck portion 53d. The arrowhead portion 53b locates, in use, inside a channel section 42, 44, with the neck portion 53d located between the ends of the ridge formations 22aa, 22bb, 24aa, 24bb and the foot portion 53c on the underside of the channel section opening 50, 52. The arrowhead portion 53b configuration facilitates insertion of the foot inserts 53 during assembly, whilst locking them in place once inserted. The feet inserts 53 may be hollow, to facilitate deformation for location for use. When in place, the feet inserts 53 provide resistance to slipping and scratching of the surface on which the flooring system 10 is located for use.

Fig. 6b shows a foot insert 55 which comprises two engaging formations 55a held together by a foot section 55c extending therebetween. Each engaging formation 55a is of generally similar design to the engaging formation 53a of inserts 53 discussed above and thus comprises the three main portions 55b, 55c and 55d corresponding to 53b, 53c and 53d. The feet inserts 55 locate in adjacent channel sections of adjacent, interconnected wiper units 12 such that the insert 55 acts to reinforce the interconnection between the adjacent units 12 and particularly helps to prevent relative sliding movement between the adjacent units 12 in a direction along their length.

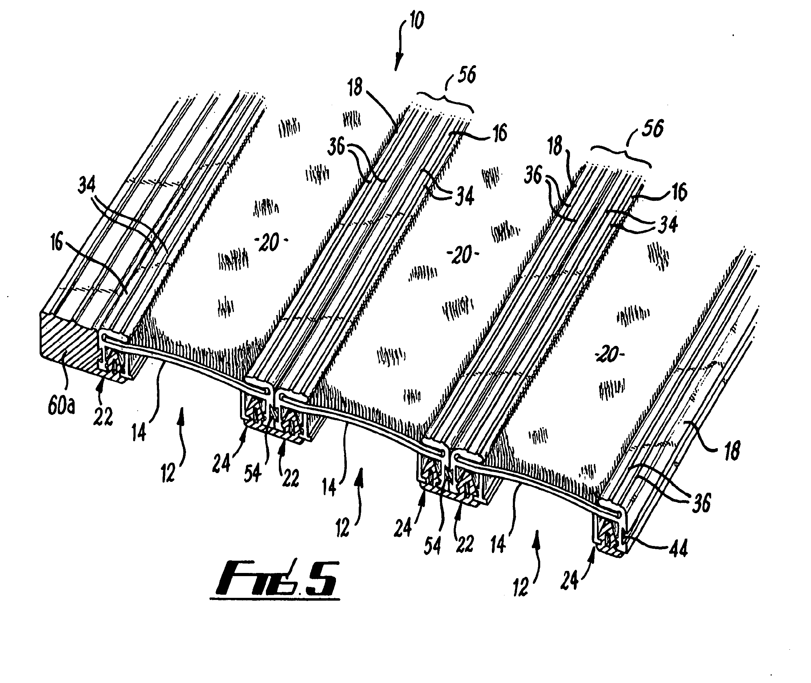

A modular flooring system 10 is constructed using a plurality of wiper units 12 as shown in Figs. 3 and 5. The units 12 are interconnected in a side-by-side, parallel configuration with respective outer edge surfaces 46, 48 in abutment. A wiper unit 12 having two connecting channels 42,44 is positioned to be on one side of the system, and a wiper unit 12 having a male formation 62 is interconnected thereto by slidingly locating the male formation 62 along the connecting channel 44 until the two units 12 are aligned. Subsequent units 12 having male 62 and channel formations 44 are interconnected to build up the flooring system 10. When the desired number of wiper units 12 are assembled, which number is generally determined by the dimensions of the flooring system 10 required, both edges comprise connecting channels, channel 42 down one edge and channel 44 down the other edge.

End stops (not shown) may be provided to prevent any sliding movement between the wiper units 12 in a direction generally along the length of the units 12 and movement of the rods 54 along the channels. The end stops may be elongate members that connect across preferably the ends of the interconnected units 12 to prevent unwanted sliding movement between the units 12.

However, the feet inserts 55 having two engaging formations 55a, help prevent such relative sliding movement between units 12. The feet inserts 55 are particularly effective in this regard when the material from which they are made resists sliding movement over the channel sections 23, 25, for example, when made of polymeric material, rubber, plastic or the like.

When a series of units 12 is interconnected to form a flooring or matting system 10, adjacent formations 16, 18 between adjacent units 12 define a scraper region or strip 56. The ribs 34, 36 extend generally along the length of the scraper region 56.

Elongate end sections 60 (Fig. 4) may be provided to locate within the exposed channels 42, 44, for those wiper units 12 located on the end of the series of units 12, whereby to finish off the edge of the matting system 10. The end section 60 may be provided in various widths or may be cut to desired width to enable the overall width of the flooring system 10 to be engineered according to the desired size for application.

Preferred end sections 60a are as shown in Fig. 7. Such section 60a has a main central body 60b with two engagement formations 53a generally as described above with reference to the feet inserts 53 extending from opposite sides thereof. A section 60a is connectable to an end unit 12 of a system 10 by inserting the formation 53a into the end channel section 42, 44 of the end unit 12 (Fig. 5). The symmetrical nature of the end section 60a provides for location in this way on either side of a system 10. The main body 60b can then be cut at an appropriate point along its length to complete the system 10. Such sections 60a do not require the wiper unit 12 to have external channels 42, 44 for attachment thereto.

In use, the flooring system 10 finds particular application as a modular entrance matting system 10 for use at entrances to buildings where large volumes of traffic usually enter and leave the building. Buildings such as public buildings, shops, shopping centres, offices are a typical application for such a system 10.

A principal function of the matting system 10 is to remove dirt and other contaminants from the footwear of people entering the building, and also to act to remove contaminants from areas of other traffic, such as wheels on trolleys and the like as they move over the system 10.

The wiper material 20 exposed on the upper surface of the system 10 acts to provide a wiping action to wipe dirt and contaminant, whereas the ribs 34, 36 provided on the scraper strips 56 act to remove dirt and contaminants with more of a scraping action.

The modular nature of the system 10 enables the size of the matting 10 to be varied according to the intended application. The above embodiments illustrate a system comprising three wiper units 12, but it is envisaged that systems will generally have more such units 12.

Provision of the formations 16, 18 as an integral part of the base 14 provides for relatively simple and cost effective manufacture, whilst the configuration of the formations 16, 18 provides for ready and secure attachment of wiper material 20 to the base 14. The configuration of the invention also provides for the maintenance and even reinforcement of the retention of the wiper material 20 on the base 14, as traffic bears down on the system 10 and in particular the formations 16, 18.

Various modifications may be made without departing from the scope of the present invention as defined in the claims. For example, the means of interconnection between adjacent wiper units 12 can be by way of a separate interconnecting member locatable along adjacent connecting channels 42, 44 (Fig. 4). The connecting channels 42,44 will be as generally described above, and the interconnecting member shaped to locate in and between adjacent channels. The member is preferably elongate and sliding locatable down adjacent, facing channels 42, 44. An advantage of this arrange is that the system 10 only requires one form of wiper unit 12.

The connecting formations 53a, 55a preferably extend along the length of a unit 12 in a continuous formation as described above, but it is within the scope of the present invention that they comprise a series of such formations 53a, 55a spaced down the length.

Similarly, the retaining formations 16, 18 are described above as extending along the length of a wiper unit 12, but they may be provided as a series of spaced formations 16, 18 along the length.

## Claims

1. A wiper unit (12) for a modular flooring system (10) comprising a base (14) with at least one integral formation (16, 18) that extends to retain wiper material (20) in place on the base (14), **characterized in that** the at least one integral formation (16, 18) is deformable to be movable during assembly of the wiper unit (12) to extend to clamp the wiper material (20).

2. A wiper unit (12) according to claim 1, **characterized in that** the base (14) is a unitary structure.

3. A wiper unit (12) according to claim 1 or 2, **characterized in that** it is elongate to be in the form of a wiper strip.

4. A wiper unit (12) according to claim 3, **characterized in that** it has an elongate base (14) with an elongate upper surface (32).

5. A wiper unit (12) according to claim 4, **characterized in that** the wiper material (20) is located along the said upper surface (32) of the base (14), with the at least one integral formation (16, 18) extending along each elongate edge of the upper surface (32).

6. A wiper unit (12) according to claim 5, **characterized in that** the at least one integral formation extends generally from one of the elongate edges of the wiper unit (12) over the base (14).

7. A wiper unit (12) according to claim 5 or 6, **characterized in that** the at least one integral formation (16, 18) extends over the upper surface (32) to clamp and retain wiper material (20) between the integral formation (16, 18) and the upper surface (32).

8. A wiper unit (12) according to claim 7, **characterized in that** the at least one integral formation (16, 18) extends to less than halfway across the width of the surface (32) and the wiper material (20) thereon.

9. A wiper unit (12) according to claim 8, **characterized in that** the at least one integral formation (16, 18) extends to between one quarter and one eighth of the width of the surface (32) and the wiper material (20) thereon.

10. A wiper unit (12) according to one of claims 1 to 9, **characterized in that** the at least one integral formation (16, 18) is movable from a non-clamping condition where the integral formation (16, 18) provides no retention of wiper material (20) on the base (14), to a clamping condition wherein wiper material (20) is retained on the base (14).

11. A wiper unit (12) according to one of claims 4 to 9 and claim 10, **characterized in that** the at least one integral formation (16, 18) is movable in pivotal action, to move from the non-clamping condition where the integral formation extends at an angle to the upper surface (32) of the base (14), to the clamping condition wherein the formation extends generally parallel to and over the said upper surface (32).

12. A wiper unit (12) according to claim 11, **characterized in that** the at least one integral formation (16, 18) has a malleable region about which it can pivot.

13. A wiper unit (12) according to claim 11 or 12, **characterized in that** the at least one integral formation (16, 18) extends at an angle of between 30° and 90° in the non-clamping condition.

14. A wiper unit (12) according to claim 13, **characterized in that** the at least one integral formation (16, 18) extends at an angle of substantially 45°.

15. A wiper unit (12) according to one of claims 12 to 14, **characterized in that** the malleable region is located at or near a point where the integral formation (16, 18) extends from the upper surface (32).

16. A wiper unit (12) according to one of claims 11 to 15, **characterized in that** the at least one formation comprises one or more scraper formations such as ridges, hatchings or ribs (34, 36) on a surface thereof which when the formation is in the clamping condition is presented on an in use upper side of the viper unit (12) thereby to facilitate removal of dirt and other contaminants from footwear or other contacting areas of traffic passing thereover.

17. A according to one of claims 1 to 16, **characterized in that** the base (14) comprises aluminium or an aluminium alloy.

18. A wiper unit (12) according to one of claims 4 to 17, **characterized in that** its base (14) comprises at least one support structure (22, 24) beneath the said upper surface (32), which is of a part-box section configuration.

19. A wiper unit (12) according to claim 18, **characterized in that** two support structures (22, 24) are provided, each extending along a respective elongate edge of the base (14).

20. A wiper unit (12) according to claim 19, **characterized in that** the support structures (22, 24) are in spaced configuration.

21. A wiper unit (12) according to claim 19 or 20, **characterized in that** each support structure (22, 24) comprises two generally mutually parallel side sections (22a, 22b, 24a, 24b) extending downwardly to define a channel section (23, 25) which opens onto the underside of the wiper unit (12).

22. A wiper unit (12) according to claim 21, **characterized in that** each side section (22a, 22b, 24a, 24b) comprises a ridge formation (22aa, 22bb, 24aa, 24bb) that extends generally perpendicularly from the lower edge thereof partway across the opening (50, 52) of the channel section (23, 25).

23. A wiper unit (12) according to claim 22, **characterized in that** the ridge formations (22aa, 22bb, 24aa, 24bb) in the support structure (22, 24) extend to face each other in an aligned but spaced configuration, to thereby reduce the width of the opening (50, 52).

24. A wiper unit (12) according to claim 23, **characterized in that** it comprises at least one connecting formation to enable to connect it with at least one further wiper unit (12).

25. A wiper unit (12) according to claim 24, **characterized in that** the at least one connecting formation extends along the length of the base (14).

26. A wiper unit (12) according to claim 24 or 25, **characterized in that** the at least one connecting formation extends along an edge of the base (14).

27. A wiper unit (12) according to one of claims 24 to 26, **characterized in that** the at least one connecting formation comprises a connecting channel (42, 44), operable to receive an interconnecting member or cooperating male connecting formation (62) of a further wiper unit (12) for connection thereto.

28. A wiper unit (12) according to claim 27, **characterized in that** it comprises two similar connecting formations, each extending along one of two opposite edges of the base (14).

29. A modular flooring system (10) comprising a plurality of interconnected wiper units (12) according to one of claims 1 to 28.

30. A modular flooring system (10) according to claim 29, **characterized in that** it comprises an array of wiper units (12).

31. A modular flooring system (10) according to claim 29 or 30, **characterized in that** one integral formation (16, 18) on one of the wiper units (12) is located adjacent and extends alongside one integral formation (16, 18) of an adjacent wiper unit (12) such that between them the formations provide a scraper strip in the system.

32. A modular flooring system (10) according to one of claims 29 to 31, comprising at least two wiper units (12) according to one of claims 24 to 28, **characterized in that** it further comprises separate connecting means locatable in and between the said connecting formations to connect the said wiper units (12).

33. A modular flooring system (10) according to claim 32, **characterized in that** the separate connecting means is shaped so as to locate in said connecting formations to prevent the wiper units (12) from moving apart in a lateral direction relative to the length of the wiper units (12).

34. A modular flooring system (10) according to claim 32 or 33, comprising at least two wiper units (12) according to claim 27 or 28, **characterized in that** the separate connecting means comprises a connecting rod (54) with formations to engage the respective adjacent connecting channels (42, 44) during assembly of the system.

35. A modular flooring system (10) according to one of claims 29 to 34, **characterized in that** it comprises means to prevent sliding movement between interconnected wiper units (12).

36. A modular flooring system (10) according to claim 35, **characterized in that** the means comprise members extendible across and attachable to the ends of the wiper units (12).

37. A modular flooring system (10) according to one of claims 29 to 36, comprising at least two wiper units (12) according to one of claims 21 to 28, **characterized in that** feet members are provided which locate in the channel sections (23, 25).

38. A modular flooring system (10) according to claim 37, **characterized in that** the feet members extend along the length of the respective channel section (23, 25).

39. A modular flooring system (10) according to claim 37 or 38, comprising at least two wiper units according to one of claims 22 to 28, **characterized in that** each foot member comprises an engaging formation (53a, 55a, 55b) that engages around the ridge formations (22aa, 22bb, 24aa, 24bb) to locate the member in a respective channel section (23, 25).

40. A modular flooring system (10) according to one of claims 37 to 39, **characterized in that** one or more feet members comprise two engaging formations (55a, 55b) connected together by a foot section (55c) extending therebetween, such feet members being locatable in the adjacent channel sections (23, 25) of adjacent wiper units (12) to provide a foot that extends between adjacent units and which also acts to retain adjacent wiper units (12) from relative sliding movement in a direction along the length of the wiper units (12).

41. A method of assembling a wiper unit (12) according to one of claims 1 to 28, **characterized in that** wiper material (20) is located on the base (14) of the wiper unit (12) and the at least one integral formation (16, 18) is moved over the wiper material (20) to clamp the same in place on the base (14).

42. A method of assembling a modular flooring system (10) according to one of claims 32 to 40, wherein each of a plurality of wiper units (12) is assembled according to claim 41, **characterized in that** the said plurality of wiper units (12) is interconnected.

## Patentansprüche

1. Abstreifereinheit (12) für ein modulares Bodensystem (10) umfassend eine Basis (14) mit zumindest einer einteiligen Formation (16, 18), die sich so erstreckt, dass sie Abstreifermaterial (20) an der Basis festhält, **dadurch gekennzeichnet, dass** die zumindest eine einteilige Formation (16, 18) verformbar ist, um während des Zusammenbaus der Abstreifereinheit (12) beweglich zu sein, so dass sie sich zum Einklemmen des Abstreifermaterials erstreckt.

2. Abstreifereinheit (12) nach Anspruch 1, **dadurch gekennzeichnet, dass** die Basis (14) eine selbsttragende Struktur ist.

3. Abstreifereinheit (12) nach Anspruch 1 oder 2, **dadurch gekennzeichnet, dass** sie länglich ist, um die Form eines Abstreiferstreifens aufzuweisen.

4. Abstreifereinheit (12) nach Anspruch 3, **dadurch gekennzeichnet, dass** sie eine längliche Basis (14) mit einer länglichen oberen Oberfläche (32) aufweist.

5. Abstreifereinheit (12) nach Anspruch 4, **dadurch gekennzeichnet, dass** das Abstreifermaterial (20) entlang der oberen Oberfläche (32) der Basis (14) angeordnet ist, wobei die zumindest eine einteilige Formation (16, 18) sich entlang einer jeden länglichen Kante der oberen Oberfläche (32) erstreckt.

6. Abstreifereinheit (12) nach Anspruch 5, **dadurch gekennzeichnet, dass** die zumindest eine einteilige Formation sich im Allgemeinen von einer der länglichen Kanten der Abstreifereinheit (12) über die Basis (14) erstreckt.

7. Abstreifereinheit (12) nach Anspruch 5 oder 6, **dadurch gekennzeichnet, dass** die zumindest eine einteilige Formation (16, 18) sich über die obere Oberfläche (32) erstreckt, um Abstreifermaterial (20) zwischen der einteiligen Formation (16, 18) und der oberen Oberfläche (32) einzuklemmen und festzuhalten.

8. Abstreifereinheit (12) nach Anspruch 7, **dadurch gekennzeichnet, dass** die zumindest eine einteilige Formation (16, 18) sich über weniger als die Hälfte der Breite der Oberfläche (32) und des Abstreifermaterials (20) darauf erstreckt.

9. Abstreifereinheit (12) nach Anspruch 8, **dadurch gekennzeichnet, dass** die zumindest eine einteilige Formation (16, 18) sich über ein Viertel bis ein Achtel der Breite der Oberfläche (32) und des Abstreifermaterials (20) darauf erstreckt.

10. Abstreifereinheit (12) nach einem der Ansprüche 1 bis 9, **dadurch gekennzeichnet, dass** die zumindest eine einteilige Formation (16, 18) aus einem nicht klemmenden Zustand, in welchem die einteilige Formation (16, 18) das Abstreifermaterial (20) an der Basis (14) nicht hält, in einen klemmenden Zustand bewegt werden kann, in welchem das Abstreifermaterial (20) an der Basis (14) gehalten wird.

11. Abstreifereinheit (12) nach einem der Ansprüche 4 bis 9 und 10, **dadurch gekennzeichnet, dass** die zumindest eine einteilige Formation (16, 18) in einem Schwenkvorgang beweglich ist, um aus dem nicht klemmenden Zustand, in welchem die einteilige Formation sich in einem Winkel zu der oberen Oberfläche (32) der Basis (14) erstreckt, in den klemmenden Zustand, in welchem die Formation sich im Allgemeinen parallel zu der und über die Oberfläche (32) erstreckt, bewegt zu werden.

12. Abstreifereinheit (12) nach Anspruch 11, **dadurch gekennzeichnet, dass** die zumindest eine einteilige Formation (16, 18) einen umformbaren Bereich aufweist, um welchen sie verschwenkt werden kann.

13. Abstreifereinheit (12) nach Anspruch 11 oder 12, **dadurch gekennzeichnet, dass** die zumindest eine einteilige Formation (16, 18) sich im nicht klemmenden Zustand in einem Winkel von zwischen 30° und 90° erstreckt.

14. Abstreifereinheit (12) nach Anspruch 13, **dadurch gekennzeichnet, dass** die zumindest eine einteilige Formation (16, 18) sich in einem Winkel von im Wesentlichen 45° erstreckt.

15. Abstreifereinheit (12) nach einem der Ansprüche 12 bis 14, **dadurch gekennzeichnet, dass** der umformbare Bereich sich an oder nahe einem Punkt befindet, an welchem die einteilige Formation (16, 18) sich von der oberen Oberfläche (32) weg erstreckt.

16. Abstreifereinheit (12) nach einem der Ansprüche 11 bis 15, **dadurch gekennzeichnet, dass** die zumindest eine Formation an einer Oberfläche davon, welche, wenn die Formation sich im klemmenden Zustand befindet, an einer bei der Verwendung oben liegenden Seite der Abstreifereinheit (12) liegt, eine oder mehrere Schaberformationen, wie etwa Wülste, Schraffen oder Rippen (34, 36) aufweist, um dadurch die Entfernung von Schmutz oder anderen Verunreinigungen von Schuhwerk oder anderen Kontaktbereichen von darüber laufendem Verkehr zu erleichtern.

17. Abstreifereinheit (12) nach einem der Ansprüche 1 bis 16, **dadurch gekennzeichnet, dass** die Basis (14) Aluminium oder eine Aluminiumlegierung umfasst.

18. Abstreifereinheit (12) nach einem der Ansprüche 4 bis 17, **dadurch gekennzeichnet, dass** ihre Basis (14) zumindest eine Trägerstruktur (22, 24) unterhalb der oberen Oberfläche (32) umfasst, welche eine Konfiguration mit zum Teil schachtelförmigem Querschnitt aufweist.

19. Abstreifereinheit (12) nach Anspruch 18, **dadurch gekennzeichnet, dass** zwei Trägerstrukturen (22, 24) vorgesehen sind, deren jede sich entlang einer jeweiligen länglichen Kante der Basis (14) erstreckt.

20. Abstreifereinheit (12) nach Anspruch 19, **dadurch gekennzeichnet, dass** die Trägerstrukturen (22, 24) sich in einer beabstandeten Konfiguration befinden.

21. Abstreifereinheit (12) nach Anspruch 19 oder 20, **dadurch gekennzeichnet, dass** jede Trägerstruktur (22, 24) zwei im Allgemeinen zueinander parallele Seitenabschnitte (22a, 22b, 24a, 24b) umfasst, die sich nach unten erstrecken, um einen Kanalabschnitt (23, 25) zu definieren, welcher sich zur Unterseite der Abstreifereinheit (12) öffnet.

22. Abstreifereinheit (12) nach Anspruch 21, **dadurch gekennzeichnet, dass** jeder Seitenabschnitt (22a, 22b, 24a, 24b) eine Wulstformation (22aa, 22bb, 24aa, 24bb) umfasst, die sich im Allgemeinen senkrecht von der unteren Kante davon teilweise über die Öffnung (50, 52) des Kanalabschnitts (23, 25) erstreckt.

23. Abstreifereinheit (12) nach Anspruch 22, **dadurch gekennzeichnet, dass** die Wulstformationen (22aa, 22bb, 24aa, 24bb) in der Trägerstruktur (22, 24) sich so erstrecken, dass sie einander in einer aufeinander ausgerichteten, aber beabstandeten Konfiguration zugewandt sind, um dadurch die Breite der Öffnung (50, 52) zu verringern.

24. Abstreifereinheit (12) nach Anspruch 23, **dadurch gekennzeichnet, dass** sie zumindest eine Verbindungsformation umfasst, die es ermöglicht, sie mit zumindest einer weiteren Abstreifereinheit (12) zu verbinden.

25. Abstreifereinheit (12) nach Anspruch 24, **dadurch gekennzeichnet, dass** die zumindest eine Verbindungsformation sich über die Länge der Basis (14) erstreckt.

26. Abstreifereinheit (12) nach Anspruch 24 oder 25, **dadurch gekennzeichnet, dass** die zumindest eine Verbindungsformation sich entlang einer Kante der Basis (14) erstreckt.

27. Abstreifereinheit (12) nach einem der Ansprüche 24 bis 26, **dadurch gekennzeichnet, dass** die zumindest eine Verbindungsformation einen Verbindungskanal (42, 44) umfasst, der dazu dient, ein Verbindungselement oder eine eingreifende Steckverbindungsformation (62) einer weiteren Abstreifereinheit (12) zur Verbindung damit aufzunehmen.

28. Abstreifereinheit (12) nach Anspruch 27, **dadurch gekennzeichnet, dass** sie zwei ähnliche Verbindungsformationen umfasst, deren jede sich entlang einer von zwei entgegengesetzten Kanten der Basis (14) erstreckt.

29. Modulares Bodensystem (10) umfassend eine Vielzahl von miteinander verbundenen Abstreifereinheiten (12) nach einem der Ansprüche 1 bis 28.

30. Modulares Bodensystem (10) nach Anspruch 29, **dadurch gekennzeichnet, dass** es eine Anordnung von Abstreifereinheiten (12) umfasst.

31. Modulares Bodensystem (10) nach Anspruch 29 oder 30, **dadurch gekennzeichnet, dass** eine einteilige Formation (16, 18) an einer der Abstreifereinheiten (12) benachbart zu einer einteiligen Formation (16, 18) einer benachbarten Abstreifereinheit (12) angeordnet ist und sich entlang dieser erstreckt, so dass die Formationen zusammen einen Schaberstreifen im System bereitstellen.

32. Modulares Bodensystem (10) nach einem der Ansprüche 29 bis 31, umfassend zumindest zwei Abstreifereinheiten (12) nach einem der Ansprüche 24 bis 28, **dadurch gekennzeichnet, dass** es des Weiteren separate Verbindungsmittel umfasst, die in und zwischen den Verbindungsformationen angeordnet werden können, um die Abstreifereinheiten (12) zu verbinden.

33. Modulares Bodensystem (10) nach Anspruch 32, **dadurch gekennzeichnet, dass** das separate Verbindungsmittel so geformt ist, dass es in den Verbindungsformationen angeordnet werden kann, um ein Auseinanderbewegen der Abstreifereinheiten (12) in bezüglich der Länge der Abstreifereinheiten (12) seitlicher Richtung zu verhindern.

34. Modulares Bodensystem (10) nach Anspruch 32 oder 33, umfassend zumindest zwei Abstreifereinheiten (12) nach Anspruch 27 oder 28, **dadurch gekennzeichnet, dass** das separate Verbindungsmittel ein Verbindungsprofil (54) mit Formationen umfasst, welche beim Zusammenbau des Systems in die benachbarten Verbindungskanäle (42, 44) eingreifen.

35. Modulares Bodensystem (10) nach einem der Ansprüche 29 bis 34, **dadurch gekennzeichnet, dass** es Mittel umfasst, um eine Gleitbewegung zwischen miteinander verbundenen Abstreifereinheiten (12) zu verhindern.

36. Modulares Bodensystem (10) nach Anspruch 35, **dadurch gekennzeichnet, dass** die Mittel Elemente umfassen, die sich über die Enden der Abstreifereinheiten (12) erstrecken und an diesen befestigt werden können.

37. Modulares Bodensystem (10) nach einem der Ansprüche 29 bis 36, umfassend zumindest zwei Abstreifereinheiten (12) nach einem der Ansprüche 21 bis 28, **dadurch gekennzeichnet, dass** Fusselemente vorgesehen sind, die in den Kanalabschnitten (23, 25) angeordnet werden.

38. Modulares Bodensystem (10) nach Anspruch 37, **dadurch gekennzeichnet, dass** die Fusselemente sich über die Länge des jeweiligen Kanalabschnitts (23, 25) erstrecken.

39. Modulares Bodensystem (10) nach Anspruch 37 oder 38, umfassend zumindest zwei Abstreifereinheiten nach einem der Ansprüche 22 bis 28, **dadurch gekennzeichnet, dass** jedes Fusselement eine Eingreifformation (53a, 55a, 55b) umfasst, welche die Wulstformationen (22aa, 22bb, 24aa, 24bb) umgreift, um das Element in einem jeweiligen Kanalabschnitt (23, 25) anzuordnen.

40. Modulares Bodensystem (10) nach einem der Ansprüche 37 bis 39, **dadurch gekennzeichnet, dass** ein oder mehrere Fusselemente zwei Eingreifformationen (55a, 55b) umfassen, welche durch eine sich dazwischen erstreckende Fussformation (55c) miteinander verbunden sind, wobei solche Fusselemente in den benachbarten Kanalabschnitten (23, 25) von benachbarten Abstreifereinheiten (12) angeordnet werden können, um einen Fuss bereitzustellen, welcher sich zwischen benachbarten Einheiten erstreckt und welcher auch dazu dient, benachbarte Abstreifereinheiten (12) an einer relativen Gleitbewegung in einer Richtung entlang der Länge der Abstreifereinheiten (12) zu hindern.

41. Verfahren zum Zusammenbau einer Abstreifereinheit (12) nach einem der Ansprüche 1 bis 28, **dadurch gekennzeichnet, dass** Abstreifermaterial (20) an der Basis (14) der Abstreifereinheit (12) angeordnet wird und die zumindest eine einteilige Formation (16, 18) über das Abstreifermaterial (20) bewegt wird, um dasselbe an der Basis (14) festzuklemmen.

42. Verfahren zum Zusammenbau eines modularen Bodensystems (10) nach einem der Ansprüche 32 bis 40, wobei jede Einheit aus einer Vielzahl von Abstreifereinheiten (12) nach Anspruch 41 zusammengebaut wird, **dadurch gekennzeichnet, dass** die Vielzahl von Abstreifereinheiten (12) miteinander verbunden wird.

## Revendications

1. Unité d'essuyage (12) pour un système modulaire de planchers (10) comprenant une base (14) avec au moins une formation intégrée (16, 18) qui s'étend pour maintenir du matériau d'essuyage (20) en place sur la base (14), **caractérisée en ce que** ladite au moins une formation intégrée (16, 18) est déformable pour pouvoir être déplacée lors de l'assemblage de l'unité d'essuyage (12) pour s'étendre et bloquer le matériau d'essuyage (20).

2. Unité d'essuyage (12) selon la revendication 1, **caractérisée en ce que** la base (14) est une structure unitaire.

3. Unité d'essuyage (12) selon la revendication 1 ou 2, **caractérisée en ce qu'**elle est allongée pour être sous la forme d'une bande d'essuyage.

4. Unité d'essuyage (12) selon la revendication 3, **caractérisée en ce qu'**elle comporte une base allongée (14) avec une surface supérieure allongée (32).

5. Unité d'essuyage (12) selon la revendication 4, **caractérisée en ce que** le matériau d'essuyage (20) est situé le long de ladite surface supérieure (32) de la base (14), ladite au moins une formation intégrée (16, 18) s'étendant le long de chaque bord allongé de la surface supérieure (32).

6. Unité d'essuyage (12) selon la revendication 5, **caractérisée en ce que** ladite au moins une formation intégrée s'étend globalement à partir de l'un des bords allongés de l'unité d'essuyage (12) au-dessus la base (14).

7. Unité d'essuyage (12) selon la revendication 5 ou 6, **caractérisée en ce que** ladite au moins une formation intégrée (16, 18) s'étend au-dessus la surface supérieure (32) pour bloquer et maintenir le matériau d'essuyage (20) entre la formation intégrée (16, 18) et la surface supérieure (32).

8. Unité d'essuyage (12) selon la revendication 7, **caractérisée en ce que** ladite au moins une formation intégrée (16, 18) s'étend sur moins de la moitié de la largeur de la surface (32) et du matériau d'essuyage (20) sur celle-ci.

9. Unité d'essuyage (12) selon la revendication 8, **caractérisée en ce que** ladite au moins une formation intégrée (16, 18) s'étend entre un quart et un huitième de la largeur de la surface (32) et du matériau d'essuyage (20) sur celle-ci.

10. Unité d'essuyage (12) selon l'une quelconque des revendications 1 à 9, **caractérisée en ce que** ladite au moins une formation intégrée (16, 18) peut être déplacée à partir d'un état de non-blocage, dans lequel la formation intégrée (16, 18) n'assure aucun maintien du matériau d'essuyage (20) sur la base (14), vers un état de blocage dans lequel le matériau d'essuyage (20) est maintenu sur la base (14).

11. Unité d'essuyage (12) selon l'une quelconque des revendications 4 à 9 et 10, **caractérisée en ce que** ladite au moins une formation intégrée (16, 18) peut être déplacée dans une action de pivotement, pour passer de l'état de non-blocage, où la formation intégrée s'étend à un certain angle par rapport à la surface supérieure (32) de la base (14), à l'état de blocage dans lequel la formation s'étend globalement parallèlement à et au-dessus de ladite surface (32).

12. Unité d'essuyage (12) selon la revendication 11, **caractérisée en ce que** ladite au moins une formation intégrée (16, 18) présente une zone malléable autour de laquelle elle peut pivoter.

13. Unité d'essuyage (12) selon la revendication 11 ou 12, **caractérisée en ce que** ladite au moins une formation intégrée (16, 18) s'étend à un angle compris entre 30° et 90° dans l'état de non-blocage.

14. Unité d'essuyage (12) selon la revendication 13, **caractérisée en ce que** ladite au moins une formation intégrée (16, 18) s'étend à un angle de sensiblement 45°.

15. Unité d'essuyage (12) selon l'une quelconque des revendications 12 à 14, **caractérisée en ce que** la région malléable est située au niveau ou à proximité d'un point où la formation intégrée (16, 18) s'étend à partir de la surface supérieure (32).

16. Unité d'essuyage (12) selon l'une quelconque des revendications 11 à 15, **caractérisée en ce que** ladite au moins une formation comprend une ou plusieurs formations de raclage, telles que des crêtes, des hachures ou des nervures (34, 36) sur une surface de celle-ci qui, lorsque la formation est dans l'état de blocage, sont situées sur un côté supérieur de l'unité d'essuyage (12) quand celle-ci est utilisée, de manière à faciliter l'enlèvement de la saleté et d'autres contaminants de chaussures ou d'autres zones de contact du trafic passant sur celle-ci.

17. Unité d'essuyage (12) selon l'une quelconque des revendications 1 à 16, **caractérisée en ce que** la base (14) comprend de l'aluminium ou un alliage d'aluminium.

18. Unité d'essuyage (12) selon l'une quelconque des revendications 4 à 17, **caractérisée en ce que** sa base (14) comprend au moins une structure de support (22, 24) au-dessous de ladite surface supérieure (32), qui a une configuration de section partiellement en caisson.

19. Unité d'essuyage (12) selon la revendication 18, **caractérisée en ce que** deux structures de support (22, 24) sont prévues, chacune s'étendant le long d'un bord allongé respectif de la base (14).

20. Unité d'essuyage (12) selon la revendication 19, **caractérisée en ce que** les structures de support (22, 24) sont dans une configuration espacée.

21. Unité d'essuyage (12) selon la revendication 19 ou 20, **caractérisée en ce que** chaque structure de support (22, 24) comprend deux sections latérales globalement mutuellement parallèles (22a, 22b, 24a, 24b) s'étendant vers le bas pour définir une section de passage (23, 25) qui s'ouvre sur la face inférieure de l'unité (12).

22. Unité d'essuyage (12) selon la revendication 21, **caractérisée en ce que** chaque section latérale (22a, 22b, 24a, 24b) comprend une formation de crête (22aa, 22bb, 24aa, 24bb) qui s'étend globalement perpendiculairement à partir du bord inférieur de celle-ci partiellement à travers l'ouverture (50, 52) de la section de passage (23, 25).

23. Unité d'essuyage (12) selon la revendication 22, **caractérisée en ce que** les formations de crête (22aa, 22bb, 24aa, 24bb) dans la structure de support (22, 24) s'étendent pour se faire face les unes aux autres dans une configuration alignée, mais espacée, de manière à réduire la largeur de l'ouverture (50, 52).

24. Unité d'essuyage (12) selon la revendication 23, **caractérisée en ce qu'**elle comprend au moins une formation de raccordement pour permettre de la raccorder à au moins une autre unité d'essuyage (12).

25. Unité d'essuyage (12) selon la revendication 24, **caractérisée en ce que** ladite au moins une formation de raccordement s'étend le long de la longueur de la base (14).

26. Unité d'essuyage (12) selon la revendication 24 ou 25, **caractérisée en ce que** ladite au moins une formation de raccordement s'étend le long d'un bord de la base (14).

27. Unité d'essuyage (12) selon l'une quelconque des revendications 24 à 26, **caractérisée en ce que** ladite au moins une formation de raccordement comprend une passage de raccordement (42, 44), servant à recevoir un élément d'accouplement ou une formation de raccordement mâle coopérante (62) d'une autre unité d'essuyage (12) pour le raccordement à celle-ci.

28. Unité d'essuyage (12) selon la revendication 27, **caractérisée en ce qu'**elle comprend deux formations de raccordement similaires, chacune s'étendant le long d'un de deux bords opposés de la base (14).

29. Système modulaire de planchers (10) comprenant une pluralité d'unités d'essuyage accouplées (12) selon l'une quelconque des revendications 1 à 28.

30. Système modulaire de planchers (10) selon la revendication 29, **caractérisé en ce qu'**il comprend un ensemble d'unités d'essuyage (12).

31. Système modulaire de planchers (10) selon la revendication 29 ou 30, **caractérisé en ce qu'**une formation intégrée (16, 18) sur l'une des unités d'essuyage (12) est située de manière adjacente à et s'étend le long d'une formation intégrée (16, 18) d'une unité d'essuyage adjacente (12), de telle sorte qu'entre elles, les formations fournissent une bande de raclage dans le système.

32. Système modulaire de planchers (10) selon l'une quelconque des revendications 29 à 31, comprenant au moins deux unités d'essuyage (12) selon l'une quelconque des revendications 24 à 28, **caractérisé en ce qu'**il comprend en outre un moyen de raccordement distinct pouvant être placé dans et entre lesdites formations de raccordement pour raccorder lesdites unités d'essuyage (12).

33. Système modulaire de planchers (10) selon la revendication 32, **caractérisé en ce que** le moyen de raccordement distinct est formé pour venir se positionner dans lesdites formations de raccordement afin d'empêcher les unités d'essuyage (12) de s'écarter dans une direction latérale par rapport à la longueur des unités d'essuyage (12).

34. Système modulaire de planchers (10) selon la revendication 32 ou 33, comprenant au moins deux unités d'essuyage (12) selon la revendication 27 ou 28, **caractérisé en ce que** le moyen de raccordement distinct comprend une tige de raccordement (54) avec des formations pour venir en prise avec les passages de raccordement adjacentes respectives (42, 44) lors de l'assemblage du système.

35. Système modulaire de planchers (10) selon l'une quelconque des revendications 29 à 34, **caractérisé en ce qu'**il comprend des moyens pour empêcher un mouvement de glissement entre les unités d'essuyage accouplées (12).

36. Système modulaire de planchers (10) selon la revendication 35, **caractérisé en ce que** les moyens comprennent des éléments extensibles à travers les extrémités des unités d'essuyage (12) et pouvant être fixés à celles-ci.

37. Système modulaire de planchers (10) selon l'une quelconque des revendications 29 à 36, comprenant au moins deux unités d'essuyage selon l'une quelconque des revendications 21 à 28, **caractérisé en ce que** des éléments formant pieds sont prévus qui viennent se positionner dans les sections de passage (23, 25).

38. Système modulaire de planchers (10) selon la revendication 37, **caractérisé en ce que** les éléments formant pieds s'étendent le long de la longueur de la section de passage respective (23, 25).

39. Système modulaire de planchers (10) selon la revendication 37 ou 38, comprenant au moins deux unités d'essuyage selon l'une quelconque des revendications 22 à 28, **caractérisé en ce que** chaque élément formant pied comprend une formation de mise en prise (53a, 55a, 55b) qui vient en prise autour des formations de crête (22aa, 22bb, 24aa, 24bb) pour positionner l'élément dans une section de passage respective (23, 25).

40. Système modulaire de planchers (10) selon l'une quelconque des revendications 37 à 39, **caractérisé en ce qu'**un ou plusieurs éléments formant pieds comprennent deux formations de mise en prise (55a, 55b) reliées entre elles par une formation de pied (55c) s'étendant entre elles, ces éléments formant pieds pouvant être placés dans les sections de passage adjacentes (23, 25) d'unités d'essuyage (12) adjacentes pour fournir un pied qui s'étend entre des unités adjacentes et qui sert également à protéger des unités d'essuyage (12) adjacentes contre un mouvement de glissement relatif dans une direction le long de la longueur des unités d'essuyage (12).

41. Procédé d'assemblage d'une unité d'essuyage (12) selon l'une quelconque des revendications 1 à 28, **caractérisé en ce que** du matériau d'essuyage (20) est situé sur la base (14) de l'unité d'essuyage (12) et ladite au moins une formation intégrée (16, 18) est déplacée sur le matériau d'essuyage (20) pour bloquer ce dernier en place sur la base (14).

42. Procédé d'assemblage d'un système modulaire de planchers (10) selon l'une quelconque des revendications 32 à 40, dans lequel chacune d'une pluralité d'unités d'essuyage (12) est assemblée selon la revendication 41, **caractérisé en ce que** ladite pluralité d'unités d'essuyage (12) sont accouplées.
